# EUROPEAN PATENT APPLICATION

(11) **EP 4 703 628 A1**
(43) Date of publication of application: **04.03.2026**
(21) Application number: 24197527.5
(22) Date of filing: 30.08.2024
(51) Int. Cl.: F21S 41/24, F21S 41/143, F21S 41/151

(54) **LIGHTING DEVICE FOR A VEHICLE**

(71) Applicant: ZKW Group GmbH, 3250 Wieselburg (AT)
(72) Inventor: Hamar, Martin, 77900 Olomouc (CZ)
(74) Representative: Patentanwaltskanzlei Matschnig & Forsthuber OG

(57) **Abstract**

A lighting device (1) for a vehicle, particularly a motor vehicle, comprises at least one light source (10) configured to emit light, a transparent light guide body (100), at least one light coupling area (101) to couple light from the light source (10) into the light guide body (100), and a projection optics device (200) with an optical axis (X) and a focal point (F). The light guide body (100) has an upper light deflection surface (102), a light exit surface (104), and a lower light deflection surface (103). The light travels through the guide body (100), deflects between surfaces (102) and (103), and exits via the exit surface (104). Regions (BE; BE1; BE1' ... BE10') of the upper light deflection surface (102) deviate in shape from the vertical longitudinal plane (LE), resulting in intersection curves (SK1, SK2, SK3; SK1', SK2', SK3') with greater average inclinations (α1, α2) than the longitudinal axis intersection curve (SK0).

## Description

The present invention relates to a lighting device for a vehicle, in particular a motor vehicle, the lighting device comprising
- at least one light source which is configured to emit light,
- a transparent light guide body, and
- at least one light coupling area, which is configured to couple light emitted by the at least one light source into the light guide body, and
- a projection optics device, for example a projection lens, with an optical axis and a focal point, wherein
the light guide body comprises an upper light deflection surface, a light exit surface and a lower light deflection surface, the lower light deflection surface and the light exit surface converging in a common edge which runs transversely, preferably perpendicularly, to the optical axis of the projection optics device, wherein light emitted by the at least one light source and coupled into the light guide body via the light coupling region propagates in the light guide body, is deflected from the upper light deflection surface to the lower light deflection surface and deflected from the lower light deflection surface to the light exit surface, and exits the light guide body via the light exit surface, passes through the projection optics device and is imaged from the projection optics device as a light distribution with a cut-off line in a region in front of the projection optics device, the edge being imaged as a cut-off line in the light distribution.

Furthermore, the invention relates to a vehicle headlight, in particular motor vehicle headlight, comprising at least one lighting device.

Additionally, the invention relates to a vehicle, in particular a motor vehicle comprising at least one lighting device or comprising at least one vehicle headlight.

Lighting devices for use in a motor vehicle headlamp for generating a light distribution are well known. Typically, a light source or light sources create and emit light, which is guided to an optical imaging system (secondary optics), in particular a projection optics device, via a transparent light guide body (primary optics). Light emitted by the light source travels through the light guide body mainly via total internal reflection to the light exit surface. In some embodiments, such light guide bodies can also compensate for an off-axis arrangement of the light source and the optical system, wherein such arrangement is due to the design of the lighting device or a vehicle headlamp which uses the lighting device.

The optical imaging system is configured to generate together with the primary optics a specific light function or light distribution (e.g. a low beam/passing beam light distribution, a high beam light distribution, etc.) with the light received from the light source via the light guide body, wherein the shape of the light exit surface of the light guide body, in particular an edge of the light exit surface, defines the shape of the light distribution. In particular, the edge of the light exit surface/light guide body defines the form of an upper cut-off line of the light distribution, which is well known for example from low beam light distributions.

However, as the horizontal (= lateral) distance from the optical axis increases, imaging errors, in particular distortion, occur when the light rays pass through the optical imaging system. This results in the cut-off line in the light image being inclined or bent downwards with increasing lateral distance from the vertical 0°-0° line in the light image, or in less light than desired or required being emitted into the area of the cut-off line with increasing lateral distance.

It is an object of the invention to eliminate or at least minimize this problem in a lighting device mentioned at the beginning.

This object is achieved with a lighting device described above, wherein in one or more regions of the upper light deflection surface, which region or regions lies or lie laterally of a vertical longitudinal plane, which runs parallel to the optical axis of the projection optics device, and which region or regions extends or extend over a longitudinal extension approximately in the direction of the optical axis and over a transverse extension, in particular perpendicular to the optical axis, the shape of the upper light deflection surface in the region or regions deviates from the shape which the upper light deflection surface has in the vertical longitudinal plane, wherein by intersecting the upper light deflection surface with one or more vertical intersection planes in the one or more regions, which vertical intersection planes run parallel to the vertical longitudinal plane, intersection curves result, wherein these intersection curves deviate in terms of their shape from an intersection curve, the longitudinal axis intersection curve, which is obtained by intersecting the upper light deflection surface with the vertical longitudinal plane, wherein the deviation is such that an average inclination of the respective intersection curve is greater than an average inclination (α0) of the longitudinal axis intersection curve, wherein the average inclination is measured in relation to a horizontal reference plane.

The reference plane is a horizontal plane, parallel to or containing the optical axis. This reference plane is actually a horizontal plane if the lighting device is arranged in such a way that the optical axis is horizontal. If the position of the optical axis deviates to a certain extent from this horizontal alignment, the reference plane is also not exactly horizontal to the surrounding road scene.

The "average inclination" of an intersection curve is defined as the inclination of a straight line with respect to the reference plane mentioned above, wherein said straight connects a starting point of the intersection curve, which faces the light-emitting surface, and an end point of the intersection curve, which faces away from the light-emitting surface or faces towards the light source(s).

With the average inclination of the intersection curves increasing laterally outwards, the light rays incident on the upper deflection are reflected differently than at the intersection curve in the vertical longitudinal plane. As a result, these light rays pass through a (slightly) different area of the optical imaging system and are imaged by it into an area in front of the lighting device in such a way that the unfavourable imaging of the light rays described above is counteracted or this unfavourable effect is completely compensated for if the upper deflection surface is not modified.

Typically, the optical imaging system is a projection lens or a projection lens system that refracts light both in the horizontal direction transverse to the optical axis and in the vertical direction transverse to the optical axis. The projection lens (system) can have different refractive power in the vertical and horizontal direction. For example, such a projection lens has a shape that is rotationally symmetric about the optical axis.

Due to the modified shape of the upper light deflection surface in at least one region, light rays totally reflected in said at least one region emerge slightly higher from the light guide body after the second total reflection at the lower light deflection surface and hit the light entry surface of the optical imaging system slightly lower. Due to the imaging error of the optical imaging system ("barrel distortion"), the light rays are pushed upwards again so that the cut-off line runs higher and parallel to the horizon even at greater lateral distances from the optical axis.

Advantageous embodiments of the invention are described in the dependent claims.

Preferably the vertical longitudinal plane contains the optical axis.

It may be provided that
- one or more regions are located on only one side of the vertical longitudinal plane, and/or
- one or more regions extend to both sides of the vertical longitudinal plane,
   and/or
- one or more regions are directly adjacent to the vertical longitudinal plane, and/or
- one or more regions are arranged at a lateral distance from the vertical longitudinal plane, wherein for example in the case of two or more regions said regions have identical width.

In the case of two or more regions, it may be provided that the deviation of the shape of the upper deflection surface, i.e. the shape or the change in the shape of the cutting planes, is different in different regions.

It may be provided that the region or regions have a distance greater than zero from the light-emitting surface.

This refers to the distance to the edge that results at the transition from the upper light deflection surface to the light exit surface or to a vertical plane normal to the optical axis which runs through the edge.

Preferably it is provided that intersection curves with a greater lateral distance to the longitudinal plane have a greater average inclination than intersection curves with a smaller lateral distance.

This can reflect the situation that the average inclination increases continuously sideways to the outside. However, it is also possible that the average inclination is constant in one area and then changes - abruptly - to a higher angle in the next area.

It is also possible that the average inclination changes continuously in one or more areas and remain constant in other areas.

It may be provided that the average inclination of the intersection curves increases continuously in at least one region with increasing lateral distance from the vertical longitudinal plane.

It may be provided that in at least one region the average inclination of the intersection curves is constant over the width of said at least one region.

In this case, when two or more such regions follow each other on one side, the inclination increases abruptly between neighboring regions.

The intersection curves may be in the form of straight lines in at least one area.

The intersection curves may be curved in at least one area, in particular concave curved.

As already mentioned above, different regions with straight and curved intersection curves may be provided.

In general, but especially with curved intersection curves, it is important to ensure that the shape of the upper deflection surface is still such that the total reflection condition for light impinging on the upper deflection surface is fulfilled.

It may be provided that one, two or more rows of regions are provided, each row comprising at least one region. These rows run transverse to the optical axis at different distances from the light exit surface.

It may further be provided that the upper light deflection surface is formed symmetrically on both sides of the vertical longitudinal plane with respect to the longitudinal plane. However, asymmetrical designs may also be possible.

Furthermore, it may be provided that the upper light deflection surface is shaped such that second intersection curves resulting from intersecting the upper light deflection surface with second vertical intersection planes, the respective normal vector of which runs parallel to the optical axis, are curved, in particular concavely curved.

In this context it may be provided that, as the lateral distance of the second intersection curves from the vertical longitudinal plane increases, a normal, vertical distance of the intersection curve from a reference line assigned to the respective intersection curve, in particular a horizontal reference line, increases.

Further, it may be provided that second intersection curves in second intersection planes, which are arranged closer to the light exit surface, have a smaller normal distance from their horizontal reference line in corresponding first vertical intersection planes than second intersection curves, which are arranged at a greater distance from the light exit surface from their horizontal reference line.

The invention is explained in more detail below with reference to the drawing:
Fig. 1 shows a schematic perspective view of a lighting device according to a first embodiment of the invention,
Fig. 2 shows a top view of the upper deflection surface of the lighting device of Fig. 1,
Fig. 3a shows a section along a plane LE through the lighting device from Figs. 1 & 2,
Fig. 3b shows a section along a plane VE1 through the lighting device from Figs. 1 & 2,
Fig. 3c shows a section along a plane VE2 through the lighting device from Figs. 1 & 2,
Fig. 3d shows an enlarged view of the three intersection curves according to Figs. 3a - 3c,
Fig. 4 shows a schematic perspective view of a lighting device according to a second embodiment of the invention,
Fig. 5 shows a top view of the upper deflection surface of the lighting device of Fig. 4,
Fig. 6a shows a section along a plane LE through the lighting device from Figs. 4 & 5,
Fig. 6b shows a section along a plane VE1 through the lighting device from Figs. 4 & 5,
Fig. 6c shows a section along a plane VE2 through the lighting device from Figs. 4 & 5,
Fig. 6d shows an enlarged view of the three straight intersection curves according to Figs. 6a - 6c,
Fig. 7 an embodiment of a light guide body according to the invention with two rows of regions of the upper light deflection surface,
Fig. 8a shows a light guide body according to the prior art with a light distribution on the light-emitting/light exit surface with two relevant points of an intermediate light image on the light-emitting surface,
Fig. 8b shows a light guide body according to the invention with facets and with a light distribution at the light-emitting surface with the two relevant points in an intermediate light image modified according to the invention,
Fig. 9a shows a perspective view of a light guide body according to the invention depicting the upper light deflection surface,
Fig. 9b shows second intersection curves in second vertical intersection planes, and
Fig. 10 roughly schematically the effects of the invention on a light distribution with a cut-off line.

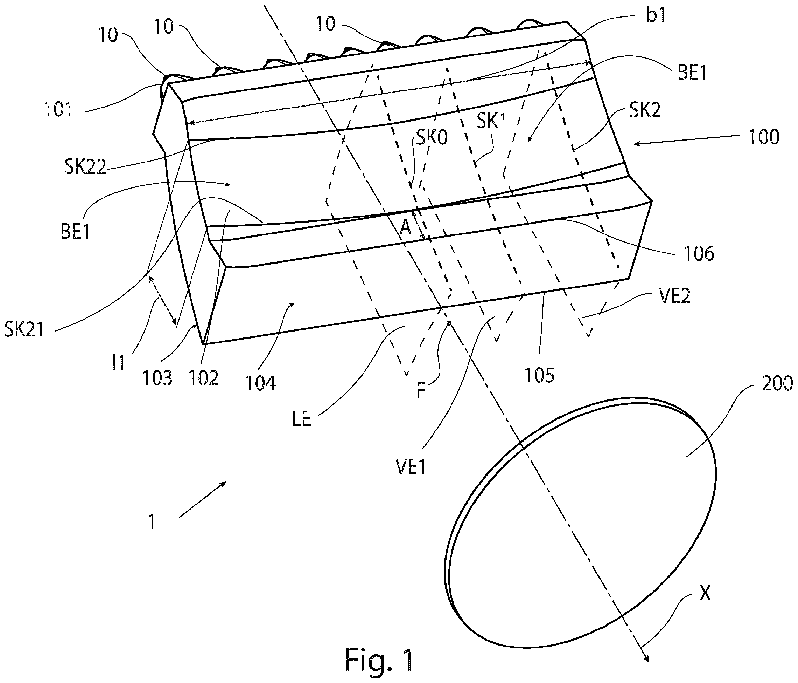

**Figure 1****,** **2** **and** **3a****-3d as well as** **Figures 9** **and** **9a** show a lighting device 1 for a vehicle, in particular a motor vehicle, the lighting device 1 comprising at least one light source 10 which is set up to emit light, a transparent light guide body 100, light coupling areas 101, which are set up to couple light emitted by a light source 10 into the light guide body 100, and a projection optics device 200, for example a projection lens, with an optical axis X and a focal point F.

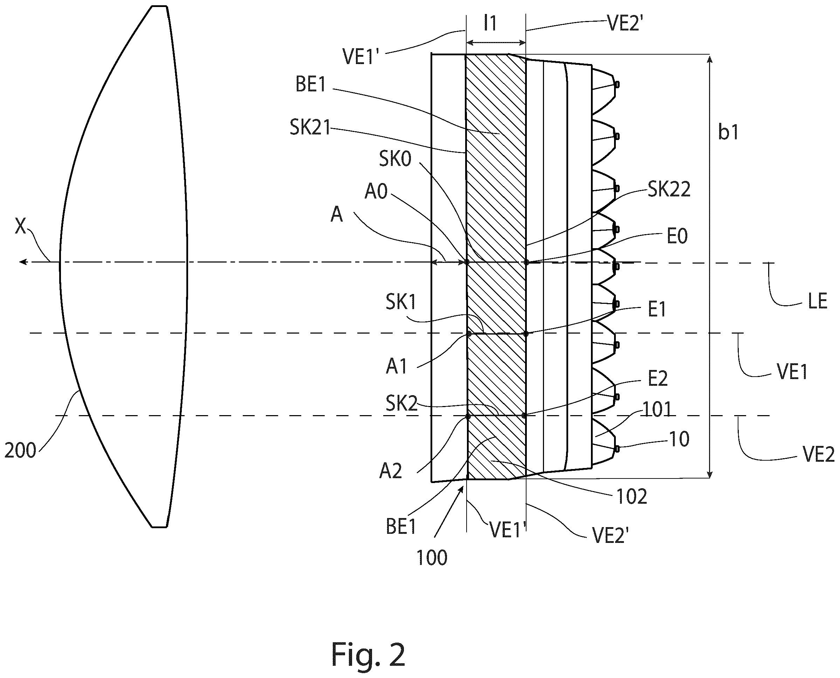

Typically, each light source comprises one or more LEDs, and as can be seen in **Figure 1** **and** **2****,** typically several light sources 10 are provided, e.g. arranged side by side, e.g. in a row. As already mentioned, light coupling areas 101 are provided for each light source 10, via which each light source 10 couples the light emitted by it into the light guide body 100.

The light coupling areas 101 are designed in such a way that the light is bundled in a desired direction and parallelized, for example.

The light guide body 100 comprises a light exit surface 104 and a lower light deflection surface 103, the lower light deflection surface 103 and the light exit surface 104 converging in a common edge 105 which runs transversely, preferably perpendicularly, to the optical axis X of the projection optics device 200.

The edge 105 is located near the focus of the projection device 200, typically, as is known from the state of the art, in a small distance below the edge 105.

The light guide body 100 further comprises an upper light deflection surface 102, wherein the upper light deflection surface 102 transitions to the light exit surface 104 in a common (upper) edge 106 which runs transversely, preferably perpendicularly, to the optical axis X of the projection optics device 200.

**Figure 2** shows the upper deflection surface 102, which comprises in this example one region BE1 extending laterally to both sides of the optical axis X. The region is arranged in a (horizontal) distance A > 0mm to the upper edge 106, has a width (lateral extension) b1 and extends over a length l1 in direction of the optical axis X.

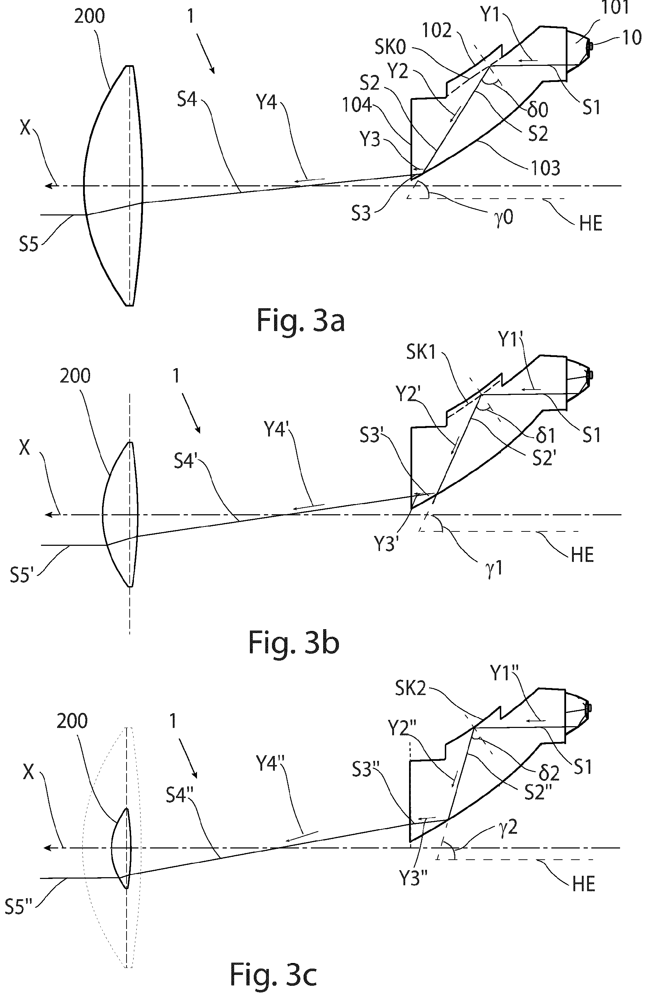

**Figures 3a - 3c** show vertical sections along three vertical intersection planes LE, VE1, VE2 through the light guide body 100 and the projection lens 200, whereby the sectional plane LE contains the optical axis X and thus represents the longitudinal centre plane of the lighting device 1. The vertical intersection planes VE1, VE2 in the region BE1 run parallel to the vertical longitudinal plane LE.

Intersecting the light guide body 100 with said vertical intersection planes LE, VE1, VE2 results for the upper light deflection surface 102 in intersection curves SK0, SK1, SK2, which reflect the shape of the upper light deflection surface 102 in the respective section.

According to the invention the shape of the upper light deflection surface 102 deviates in the region BE1 from the shape which the upper light deflection surface 102 has in the vertical longitudinal plane LE, wherein the deviation is such that an average inclination α1, α2 of the respective intersection curve SK1, SK2 is greater than the average inclination α0 of the longitudinal axis intersection curve SK0.

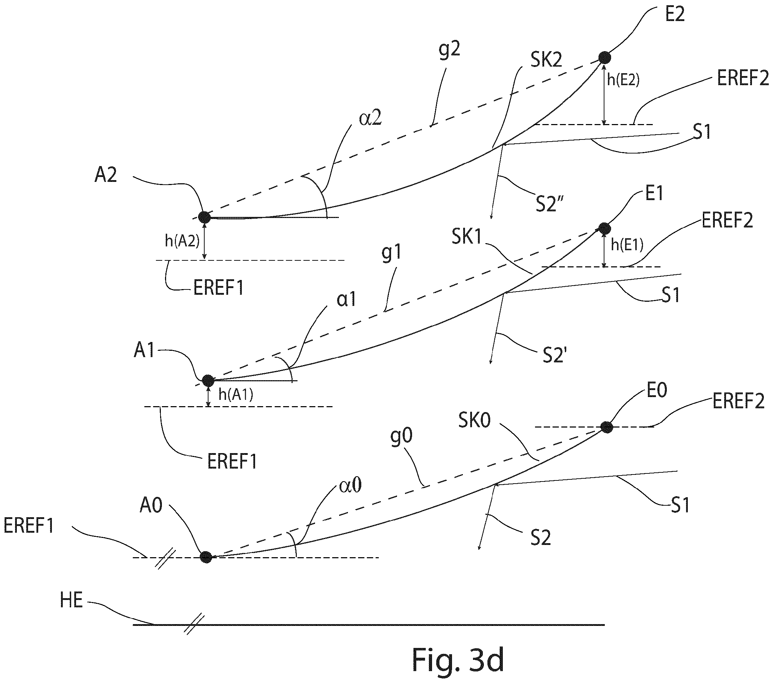

The average inclination α0, α1, α2 is measured in relation to a horizontal reference plane HE, see **Figure 3d****.**

In the case of curved intersection curves as shown (this is the general definition for the average inclination for curved sections), wherein the intersection curves SK0, SK1, SK2 are in for example concave curved, the average inclination α0, α1, α2 is defined as the angle to the horizontal plane HE of a straight line g0, g1, g2 connecting a point A0, A1, A2 on the light-emitting side delimiting the respective curved section SK0, SK1, SK2 and a point E0, E1, E2 delimiting the curved section SK on the side facing the light source.

Reference sign EREF1 defines a horizontal plane parallel to the optical axis X, wherein said reference plane EREF1 is a tangential plane to the curve SK0 at starting point A0.

Reference sign EREF2 defines a horizontal plane parallel to the optical axis X, wherein said reference plane EREF2 is a tangential plane to the curve SK0 at end point E0.

Plane EREF2 is in a lateral distance greater zero above the plane EREF1.

With respect to the reference plane EREF1, in the example shown, the point A0 of curve SK0 lies in this plane EREF1, point A1 of curve SK1 has a vertical distance h(A1) greater zero, and point A2 has a vertical distance h(A2) which is greater than the vertical distance h(A1) of point A1.

The same behaviour is true in this example for the points E0, E1, E2, wherein point E0 has a vertical distance h(E0) = 0 from plane EREF2, point E1 has a vertical distance h(E1) greater zero and greater h(A1), and point E2 has a vertical distance h(E2) > h(E1) and h(E2) > h(A2).

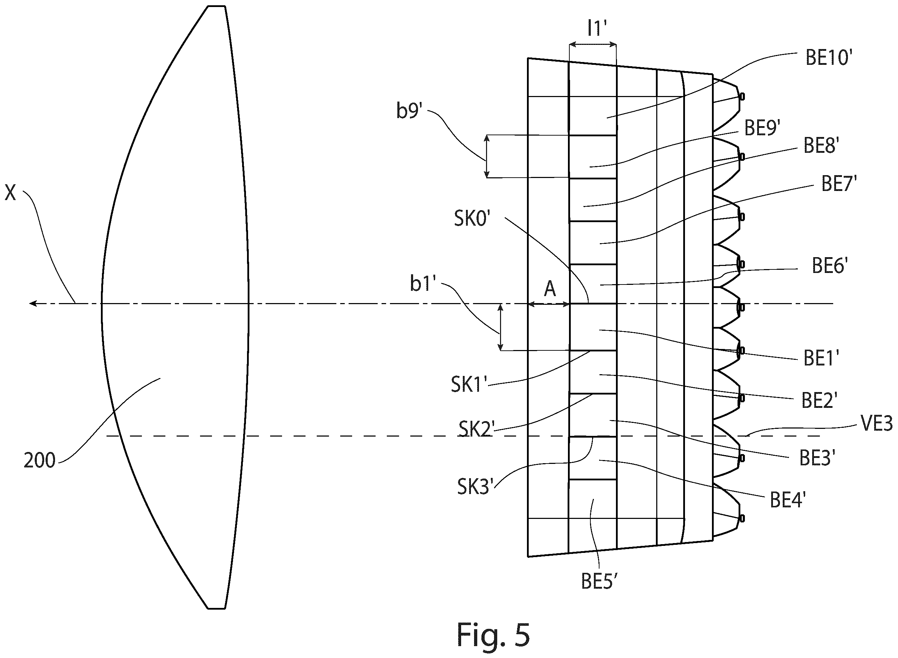

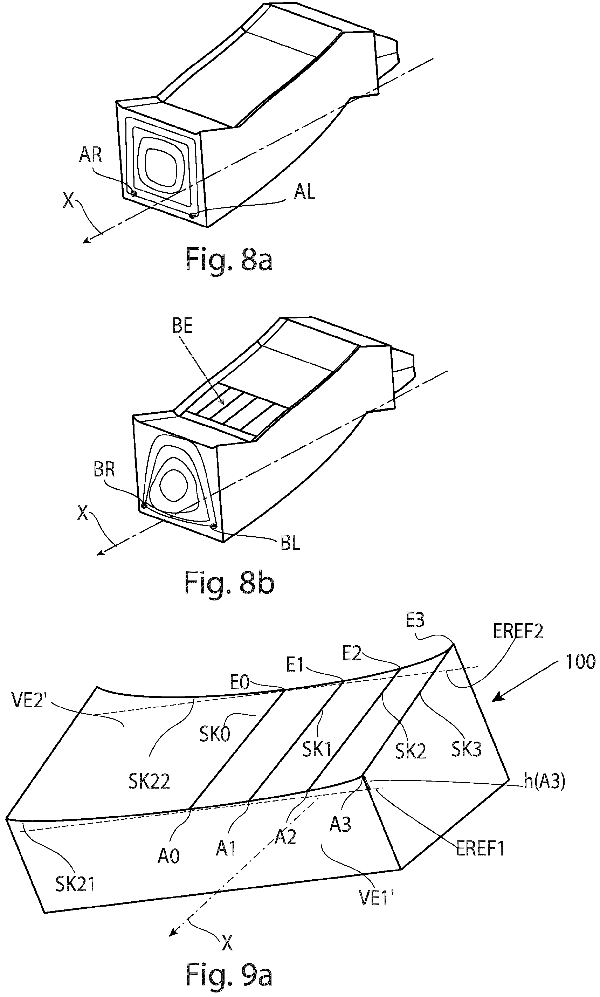

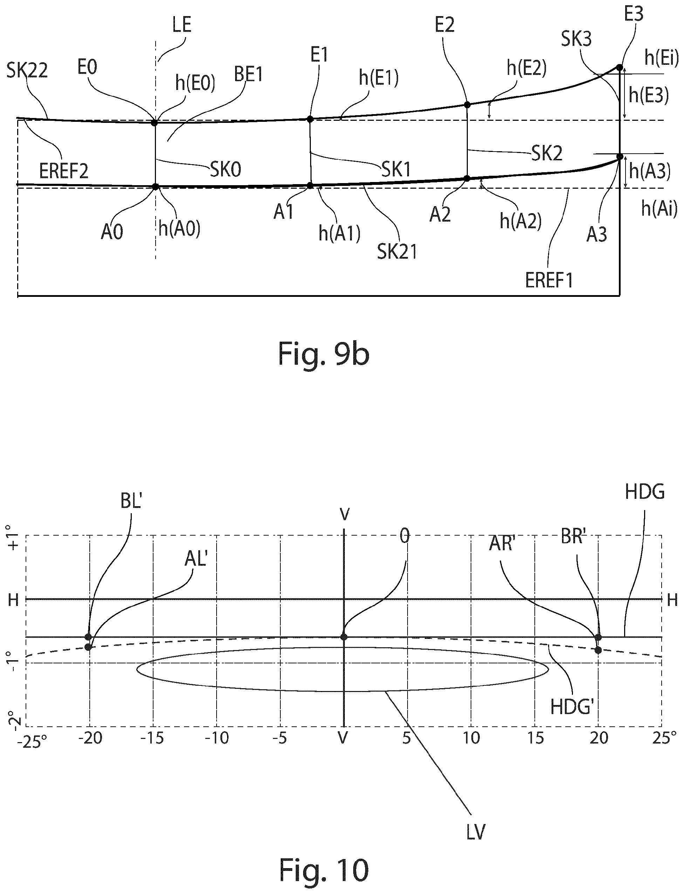

Referring in the context of **Figure 3d** to **Figures 9a** **and** **9b** it may in this example be provided that the upper light deflection surface 102 is shaped such that second intersection curves SK21, SK22 resulting from intersecting the upper light deflection surface 102 with second vertical intersection planes VE1', VE2' **(****Figure 9****,** **Figure 2****),** the respective normal vector of which runs parallel to the optical axis X, are curved, in particular concavely curved.

In this context it may be provided that, as the lateral distance of the second intersection curves SK1, SK2, SK3 from the vertical longitudinal plane LE increases, a normal, vertical distance h(Ai), h(Ei) of the intersection curve SK1, SK2; SK3 from their reference lines/planes EREF1, EREF2 assigned to the respective intersection curve, in particular a horizontal reference line/planes, increases.

In particular, it is provided that second intersection curves SK21 in second intersection planes VE1', which are arranged closer to the light exit surface 104, have a smaller normal distance h(Ai) from their horizontal reference line HREF in corresponding first vertical intersection planes VE1, VE2 than second intersection curves SK22, which are arranged at a greater distance from the light exit surface 104 from their horizonal reference line h(Ei), as shown in **Figure 9a****.**

**Figure 3a** shows in a vertical section LE that light emitted by a light source 10 and coupled into the light guide body 100 propagates via the light coupling region 101- represented by light ray S1 with direction Y1 - in the light guide body 100 to the light exit surface 104, emerges from the light guide body 100 - light ray S4, direction Y4 -, passes through the projection optics device 200, and is imaged from the projection optics device 200 as a light distribution LV with a cut-off line HDG in a region in front of the projection optics device 200, wherein the edge 105 being imaged as a cut-off line HDG in the light distribution (see **Figure 10****).**

Light ray S1 is totally reflected at the upper light deflection surface 102 (section curve SK0) and moves as light ray S2 (direction Y2) to the lower light deflection surface 103, which is designed such that incident light rays are totally reflected (total internal reflection) and deflected as light rays (represented by light ray S3, direction Y3) to the light exit surface 104, where they emerge as light rays S4 (direction Y4) from the light guide body as described. The path of light follows a Z-line through light guide body. The light rays emerging from the projection lens 200 are denoted by S5.

**Figure 3b** shows a situation analogous to **Figure 3a****,** now in section VE1. If the shape of the section curve in this section VE1 were identical to that in section LE, the light beam S1 would be identically totally reflected, i.e. the totally reflected light beam would propagate identically as light beam S2 as shown in **Figure 3a****.** However, due to the modification of the upper light deflection surface 102 in the region 102 according to the invention as described above, the light ray S1 is totally reflected in a modified manner as light ray S2', see **Figure 3b****.** The same applies as in **Figure 3c****,** here the light beam S1 is again totally reflected as light ray S2"in a different direction than the light rays S2, S2'.

For the sake of completeness only, it should be pointed out that the light ray S1 in the three vertical sections LE, VE1, VE2 are clearly not one and the same but different light rays, which, however, are characterized by the same direction of propagation in order to illustrate the effect of the invention on the propagation of the light beams at different lateral distances from the optical axis X.

While in the section LE the light ray S1 is totally reflected at an angle δ0 to the normal to the section curve SK0 as light ray S2, the modification in the area BE1 causes the light ray S1 to be totally reflected at a different angle δ1 as light ray S2'. The same applies to section VE2, where the light ray S1 is totally reflected at an angle δ2.

Furthermore, the totally reflected beam S2, S2', S2" each makes an angle γ0, γ1, γ2 with the horizontal plane HE, wherein γi ≠ δi. Furthermore, γ0 < γ1 < γ2, i.e. with increasing lateral distance from the optical axis X, the rays S2', S2" totally reflected at the upper light deflecting surface run steeper to the horizontal plane HE. Accordingly, these light rays hit the lower light deflection surface 103 in a higher area and, after total reflection (light rays S3', S3"), pass through the light exit surface 104 (light rays S4', S4") in a higher area.

The light exit surface 104 is typically a flat surface whose normal vector is approximately parallel to the optical axis X.

The lower light deflection surface is flat or at least curved, in particular convexly curved, in the direction of the optical axis, and inclined in relation to the plane HE.

In general, the upper and lower light deflection surfaces (also in the one or more modified regions) are designed in such a way that incident light is totally reflected.

Accordingly, light rays S3', S3" (after total reflection of light rays S2', S2" on the lower deflection surface 103) leave the light guide body 100 slightly higher (compared to the light rays S3) and hit the entrance surface of the projection lens 200 slightly lower (light rays S4', S4").

This results in the light rays S5', S5" on the light exit side in the vertical sections VE1 **(****Figure 3b****)** and VE2 **(****Figure 3c****)** emerging higher from the projection lens 200 than they would if the upper deflection surface 102 remained unchanged. Due to the invention, the emerging light beams emerge at approximately the same height as the light beams of the longitudinal centre plane **(****Figure 3a****),** so that the desired straight shape (without arching) and course of the cut-off line can be realised.

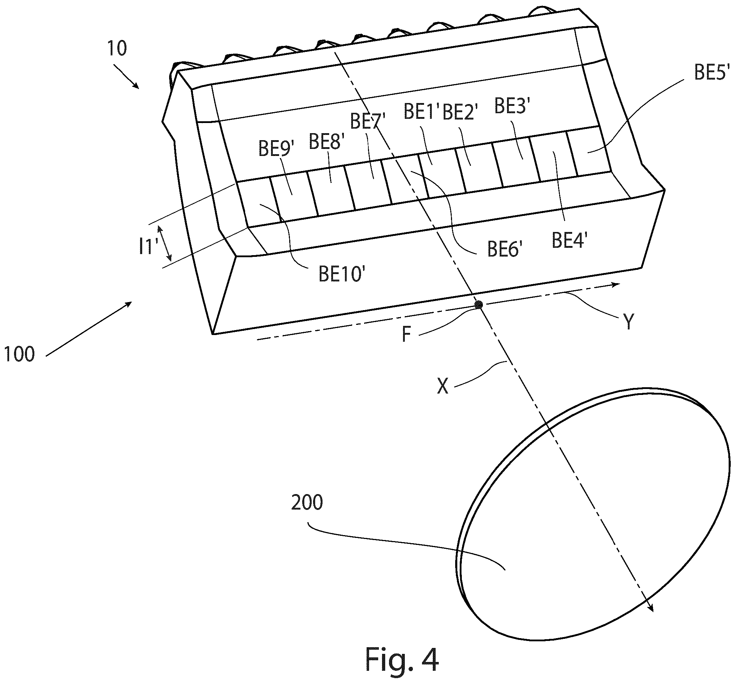

Referring now to **Figures 4****,** **5****,** **6a- 6d****,** an embodiment similar to the embodiment of **Figures 1 - 3** is shown, only the differences between the two embodiments are explained in more detail here.

In contrast to **Figure 1****,** where only one region BE1 is provided, the upper deflection surface 102 in the example according to **Figures 4****,** **5****,** **6a- 6d** is subdivided into several regions BE1' - BE10'. Each of these regions BE1' - BE10' is a flat surface, a so-called facet. Within each facet, the average inclination of a corresponding intersection curve is constant, but this average inclination changes from region to region and increases laterally towards the outside.

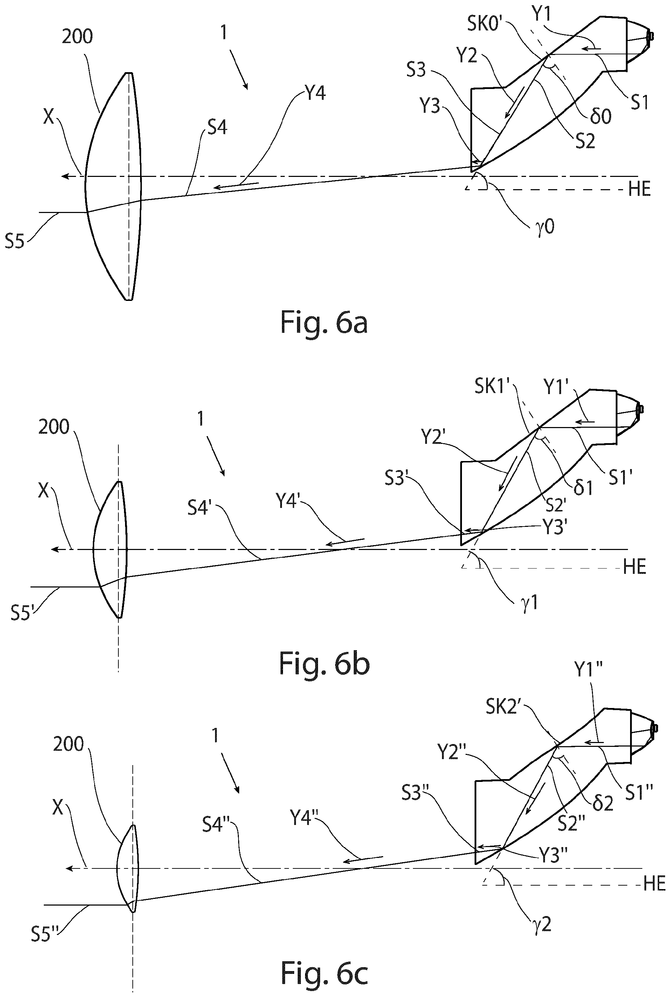

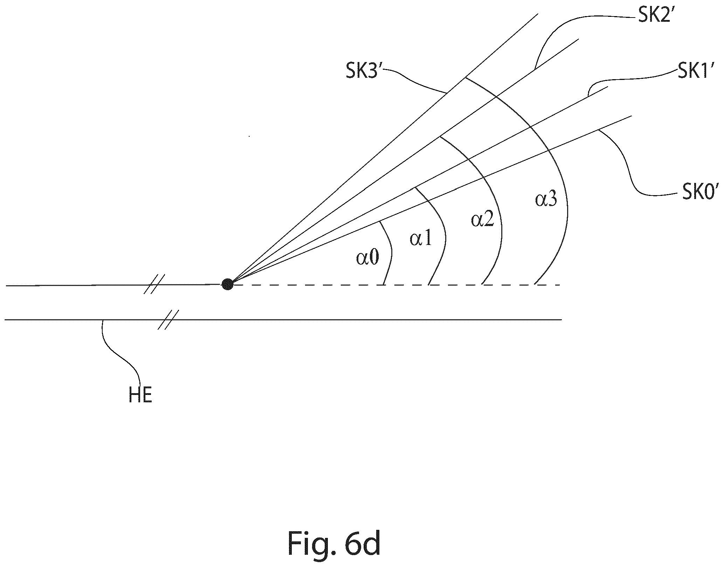

**Figures 6a - 6c** show vertical sections along vertical intersection planes LE, VE1, VE2, VE3, analogous to **Figures 3a - 3c****.** In this example, the resulting intersection curves SK0', SK1', SK2', SK3' are straight lines from the house, see also **Figure 3d****,** which also shows the "average inclination" α0, α1, α2, which in this case is simply the angle of the respective straight line to the horizontal reference plane HE. Furthermore, these figures show the influence of the invention in relation to the total internal reflection of light beams S1 in the modified areas BE1' - BE10' by means of the two exemplary intersection curves SK1', SK2', SK3'.

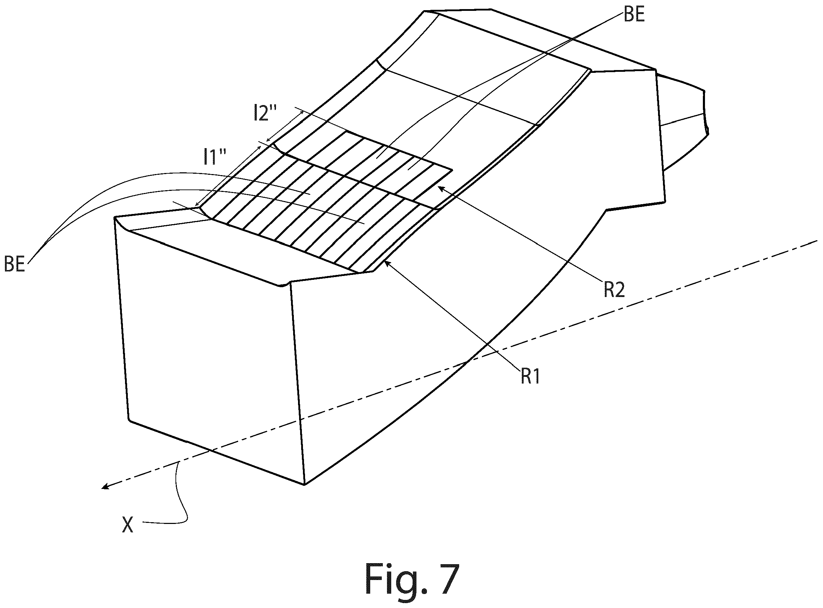

**Figure 7** shows, without going into further details, that different regions BE can be arranged not only side by side in one row, but also in several rows R1, R2. The different regions can be flat facets as described in **Figure 4** or curved (analogous to **Figure 1****),** but also - regardless of whether one, two or more rows are provided - any combination of different configurations of the regions BE can be provided. Each row may extend over a different length l1", l2" in the direction of the optical axis (but the lengths can also be identical), the width of each row R1, R2 can be different as shown or identical, the rows can be directly adjacent to each other as shown or spaced apart, and the widths of the individual areas BE can also be identical or different.

**Figures 8 and 8a** show the effect of the invention, **Figure 10** shows the corresponding effects in the light image LV.

**Figure 8** shows a light guide body 100 according to the prior art with an intermediate light image on the light-emitting surface 104, with the focus of attention on two points AL, AR of the intermediate light image. This intermediate light image is projected into the traffic area by the projection lens 200 (light distribution LV according to **Figure 10****).** Due to the large horizontal distance between the points AL, AR and the optical axis X, imaging errors (distortions) occur through the projection lens 200. These are reflected in the light distribution according to **Figure 10** by the position of the points AL', AR', which correspond to the points AL, AR of the intermediate light image. The resulting cut-off line HDG' is curved downwards, the points AL', AR' are shifted downwards from the desired cut-off line HDG into the field of view.

**Figure 8a** shows a light guide body 104 according to the invention, in this example roughly schematically with facets, with an intermediate light image on the light-emitting surface 104. The points observed in **Figure 8** now correspond to the points BL, BR. This modified intermediate light image is in turn projected into the traffic area by the projection lens 200. Due to the large horizontal distance to the optical axis X, imaging errors (distortion) also occur here, but due to the influence of the facets (areas), the intermediate light image has been modified as shown and a light distribution with corresponding points BL' and BR' is created, which points are now higher in the light distribution. The resulting cut-off line HDG is no longer curved and runs horizontally.

The curved line HDG' becomes a straight line HDG in the light distribution LV.

## Claims

1. A lighting device (1) for a vehicle, in particular a motor vehicle, the lighting device (1) comprising
- at least one light source (10) which is configured to emit light,
- a transparent light guide body (100), and
- at least one light coupling area (101), which is configured to couple light emitted by the at least one light source (10) into the light guide body (100), and
- a projection optics device (200), for example a projection lens, with an optical axis (X) and a focal point (F), wherein
the light guide body (100) comprises an upper light deflection surface (102), a light exit surface (104) and a lower light deflection surface (103), the lower light deflection surface (103) and the light exit surface (104) converging in a common edge (105) which runs transversely, preferably perpendicularly, to the optical axis (X) of the projection optics device (200), wherein
light emitted by the at least one light source (10) and coupled into the light guide body (100) via the light coupling region (101) propagates in the light guide body (100), is deflected from the upper light deflection surface (102) to the lower light deflection surface (103) and deflected from the lower light deflection surface (103) to the light exit surface (104), and exits the light guide body (100) via the light exit surface (104), passes through the projection optics device (200) and is imaged from the projection optics device (200) as a light distribution (LV) with a cut-off line (HDG) in a region in front of the projection optics device (200), the edge (105) being imaged as a cut-off line (HDG) in the light distribution (LV),
**characterized in that**
in one or more regions (BE; BE1; BE1' ... BE10') of the upper light deflection surface (102),
which region or regions (BE; BE1; BE1' ... BE10') lies or lie laterally of a vertical longitudinal plane (LE), which runs parallel to the optical axis (X) of the projection optics device (200), and which region or regions (BE; BE1; BE1' ... BE10') extends or extend over a longitudinal extension (l1; l1'; l1", l2") approximately in the direction of the optical axis (X) and over a transverse extension (b1; b1' ... b10'), in particular perpendicular to the optical axis (X),
the shape of the upper light deflection surface (102) in the region or regions (BE; BE1; BE1' ... BE10') deviates from the shape which the upper light deflection surface (102) has in the vertical longitudinal plane (LE),
wherein by intersecting the upper light deflection surface (102) with one or more vertical intersection planes (VE1, VE2) in the one or more regions (BE; BE1; BE1' ... BE10'), which vertical intersection planes (VE1, VE2) run parallel to the vertical longitudinal plane (LE), intersection curves (SK1, SK2, SK3; SK1', SK2', SK3') result, wherein
these intersection curves (SK1, SK2, SK3; SK1', SK2', SK3') deviate in terms of their shape from an intersection curve (SK0; SK0'), the longitudinal axis intersection curve (SK0; SK0'), which is obtained by intersecting the upper light deflection surface (102) with the vertical longitudinal plane (LE),
wherein the deviation is such that an average inclination (α1, α2) of the respective intersection curve (SK1, SK2, SK3; SK1', SK2', SK3') is greater than an average inclination (α0) of the longitudinal axis intersection curve (SK0), wherein the average inclination (α0, α1, α2) is measured in relation to a horizontal reference plane (HE).

2. Lighting device according to claim 1, **wherein** the vertical longitudinal plane (LE) contains the optical axis (X).

3. Lighting device according to claim 1 or 2, **wherein**
• one or more regions are located on only one side of the vertical longitudinal plane (LE), and/or
• one or more regions (BE1) extend to both sides of the vertical longitudinal plane (LE), and/or
• one or more regions (BE1', BE6') are directly adjacent to the vertical longitudinal plane (LE), and/or
• one or more regions (BE2', BE3', BE4', BE5') are arranged at a lateral distance from the vertical longitudinal plane (LE).

4. Lighting device according to one of the preceding claims, **wherein** intersection curves (SK2) with a greater lateral distance to the longitudinal plane (LE) have a greater average inclination (α1, α2) than intersection curves (SK1) with a smaller lateral distance.

5. Lighting device according to one of the preceding claims, **wherein** the average inclination of the intersection curves increases continuously in at least one region (BE1) with increasing lateral distance from the vertical longitudinal plane (LE).

6. Lighting device according to one of the preceding claims, **wherein** in at least one region (BE1' ... BE10') the average inclination of the intersection curves is constant over the width of said at least one region (BE1' ... BE10').

7. Lighting device according to one of the preceding claims, **wherein** the intersection curves are in the form of straight lines in at least one area (BE1' ... BE10').

8. Lighting device according to one of the preceding claims, **wherein** the intersection curves are curved in at least one area, in particular concave curved.

9. Lighting device according to one of the preceding claims, **wherein** one, two or more rows (R1, R2) of regions are provided, each row comprising at least one region.

10. Lighting device according to one of the preceding claims, **wherein** the upper light deflection surface (102) is formed symmetrically on both sides of the vertical longitudinal plane (LE) with respect to the longitudinal plane (LE).

11. Lighting device according to one of the preceding claims, **wherein** the upper light deflection surface (102) is shaped such that second intersection curves (SK21, SK22) resulting from intersecting the upper light deflection surface (102) with second vertical intersection planes (VE1', VE2'), the respective normal vector of which runs parallel to the optical axis (X), are curved, in particular concavely curved.

12. Lighting device according to claim 11, **wherein** as the lateral distance of the second intersection curves (SK21, SK22) from the vertical longitudinal plane (LE) increases, a normal, vertical distance (h(Ai), h(Ei)) of the intersection curve (SK21, SK22) from a reference line (EREF1, EREF2) assigned to the respective intersection curve, in particular a horizontal reference line, increases.

13. Lighting device according to claim 11 or 12, **wherein** second intersection curves (SK21) in second intersection planes (VE1'), which are arranged closer to the light exit surface (104), have a smaller normal distance (h1) from their horizontal reference line (H1) in corresponding first vertical sectional planes (VE1, VE2, ...) than second intersection curves (SK22), which are arranged at a greater distance from the light exit surface (104) from their horizontal reference line (h2).

14. Vehicle headlight, in particular motor vehicle headlight, comprising at least one lighting device (1) according to any one of claims 1 to 13.

15. Vehicle, in particular a motor vehicle comprising at least one lighting device according to any one of the claims 1 to 13 or comprising at least one vehicle headlight according to claim 14.
